# EUROPEAN PATENT SPECIFICATION

(11) **EP 3 612 341 B1**
(45) Date of publication and mention of the grant of the patent: **16.06.2021**
(21) Application number: 18724343.1
(22) Date of filing: 17.04.2018
(51) Int. Cl.: B23K 11/31

(54) **RESISTANCE WELDING MACHINE WITH A CLAMP HAVING A HINGED MECHANISM**
WIDERSTANDSSCHWEISSMASCHINE MIT EINER KLAMMER MIT EINEM SCHARNIERMECHANISMUS
MACHINE DE SOUDAGE PAR RÉSISTANCE MUNIE D'UNE PINCE AYANT UN MÉCANISME PIVOTANT

(30) Priority: 21.04.2017 IT 201700044407
(43) Date of publication of application: 26.02.2020
(73) Proprietor: Telwin S.p.A., 36030 Villaverla (VI) (IT)
(72) Inventor: MORATO, Antonino, 36030 Villaverla (VI) (IT)
(74) Representative: Burchielli, Riccardo
(86) International application number: PCT/IT2018/050066
(87) International publication number: WO 2018/193486

(56) References cited:
- JP-A- S 609 588
- SE-C1- 150 180

## Description

The present invention relates, in general, to a resistance welding machine, also known as a spot welder, for metal sheets.

More particularly, the invention relates to a resistance welding machine for spot welding of the sheets, in the bodywork of vehicles or vehicles under repair.

The spot welding is a type of resistance welding and consists in matching the parts of material to be welded and compressing the two pieces by means of a clamp; subsequently, the passage of electric energy heats the bodies to be welded up to the melting point in less than 15 seconds, thus joining the two materials.

In particular, two electrodes are applied to the ends of the clamp, and the sheets to be welded are positioned between these two electrodes, which are brought together, so as to press the two or more sheets that are between the electrodes with a force that ranges from about 150 kg to 550 kg.

A current is then made to flow between the two electrodes for a time that varies from a few fractions of a second to a few seconds.

The heat produced by the Joule effect between the two electrodes determines a melting point of the sheets and therefore a stable welding between them.

The clamp is shaped like a horseshoe and carries, at the ends of the curved arms, the electrodes necessary for the welding; depending on the type of use, various types of curved arms can be mounted with different geometries and this depends on the degree of difficulty of access to the area of the vehicle where the weld is desired.

It follows that, in some cases, to access some zones or areas of the vehicle it is necessary to use arms of considerable size, with obvious drawbacks related to the construction of the clamp and its dimensions, as well as to the relative production costs.

The discomfort in the use of these arms, sometimes, also lies in the difficulty of accessing the areas of interest of the vehicle where welding needs to be done, considering that the limit of aperture present between the two electrodes is very often less than the space existing in the welding area.

In this case, to facilitate access, it is also envisaged to unhook the arm from the clamp, so as to be able to position it in the area of interest, and then to re-hook the arm to the clamp.

However, this operation is obviously laborious and involves the presence of at least two people to complete it.

A welding machine having the characteristics of the pre-characterizing part of claim 1 is disclosed, for example, in SE150180C1 and in JPS609588A.

The object of the present invention is, therefore, to overcome the aforementioned technical drawbacks and, in particular, the main object of the present invention is to provide a resistance welding machine for metal sheet, which allows to efficiently and rapidly carry out any type of welding also at inaccessible areas or zones of a vehicle or a car.

Another object of the present invention is to provide a resistance welding machine for metal sheet which is reliable, safe, economical and more efficient than the known art.

These and other objects which will become better apparent hereinafter are achieved by a resistance welding machine for sheet metal, according to the attached claim 1; further details of the welding machine according to the invention are reported in the subsequent dependent claims.

Advantageously, the resistance welding machine, which is the object of the invention, has an arcuate geometry clamp, in which the arm is made in such a way as to considerably increase the inlet opening, in order to realize the welding even in areas that are not easily accessible of a vehicle or car.

In particular, a hinge mechanism is used, positioned at about half the arm, easy to open and close; the mechanism is of precision, does not present mechanical clearances and supports a workforce of about 550 kg and allows the passage of a current of about 15000 A.

Further characteristics and advantages of the present invention will become clearer from the description of a preferred but not exclusive embodiment of the clamp used in the resistance welding machine for sheets, according to the present invention, illustrated by way of nonlimiting example in the accompanying drawings, in which:
- figure 1 shows a perspective view of a resistance welding machine for sheets made according to the known art;
- figure 2 shows a front view of a clamp of the traditional type used in a resistance welding machine for sheets made according to the prior art;
- figure 3 shows a first perspective view from the front of a clamp realized according to the present invention, in a first operating position;
- figure 4 shows a second perspective view from the back of the clamp of figure 3, according to the present invention;
- figure 5 shows a first perspective view of the clamp from front realized according to the present invention, in a second operating position;
- figure 6 shows a second perspective view of the gripper from the rear of figure 5, according to the present invention.

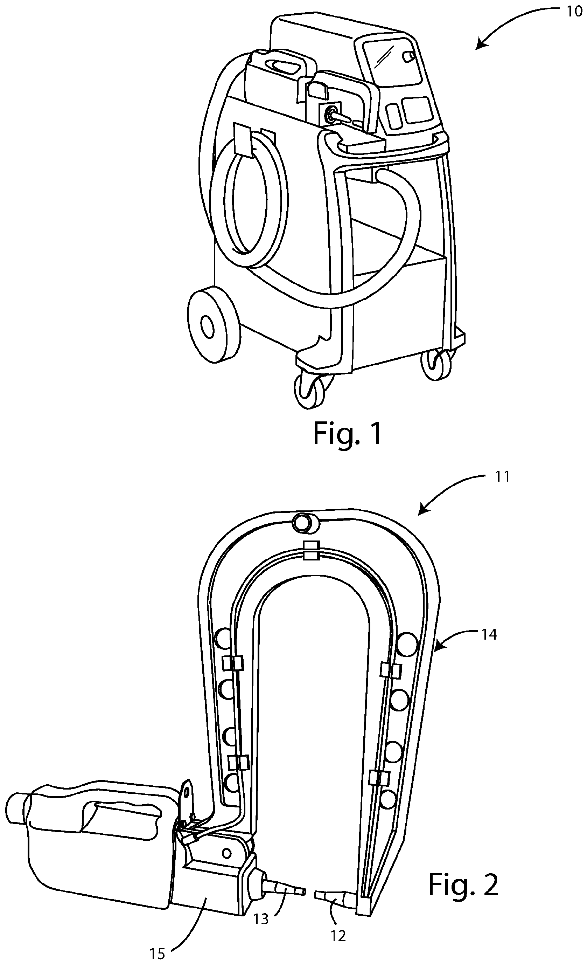

With particular reference to the figures 1-2 mentioned, the resistance welding machine or spot welder 10 can be used for the spot welding of metal sheets, such as the sheets of vehicles or vehicles under repair and uses a clamp 11, which compresses the pieces to be welded.

Subsequently, the passage of electrical energy on the electrodes 12, 13 of the clamp 11 (through the electric energy source 15) heats the bodies to be welded in extremely short time to the melting point, so as to permanently join the materials placed between the aforementioned electrodes 12, 13.

In particular, the sheets to be welded are positioned between the electrodes 12, 13, which are brought closer to each other in a way to press the sheets placed between them with a force ranging from about 150 kg to 550 kg; an electric current is then made to flow between the electrodes 12, 13 for a time that varies from a few fractions of a second to a few seconds. As can be seen in the attached figures 1-2, the clamp 11 is shaped like a horseshoe and carries, at the ends of the curved portions of the arm 14, the aforementioned electrodes 12, 13 necessary for welding.

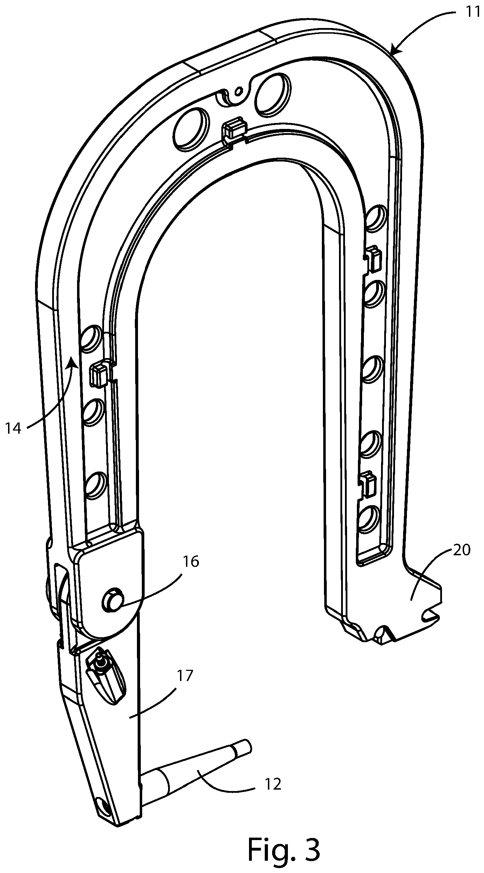

With particular reference to figures 3, 4, 5 and 6, according to the present invention, it is envisaged to provide the arm 14 in such a way as to increase the inlet opening of the clamp 11, in order to carry out the welding even in poorly accessible areas.

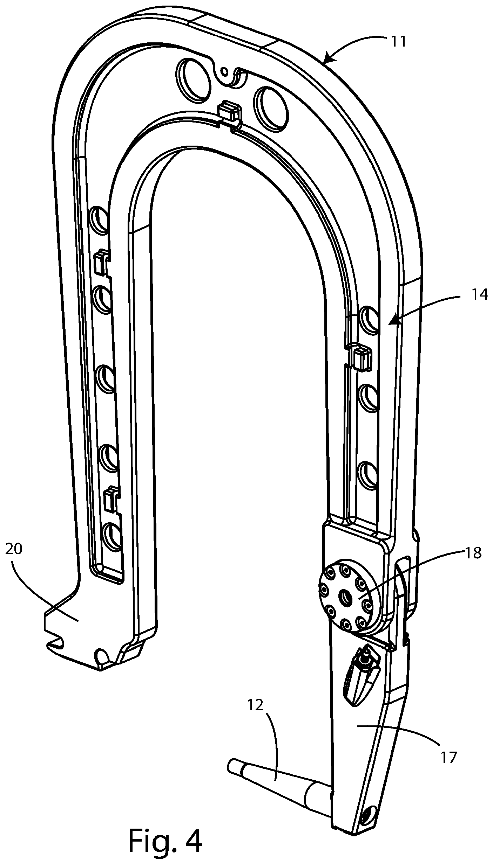

In particular, at the base 20 of the arm 14 of the clamp 11, the source or generator of electrical energy 15 is connected, which carries the electrode 13 and which transmits the electric current both to the aforementioned electrode 13 and through the base 20 and the arm 14, to the opposed electrode 12, while in the curved portion of the arm 14 opposite to the base 20 (and, in particular about half of said arcuate portion) a hinge mechanism is formed consisting of a pin 16, whose pressurisation allows the rotation, towards the external of the clamp 11, of a terminal 17 which carries the electrode 12 (figures 3 and 4 attached).

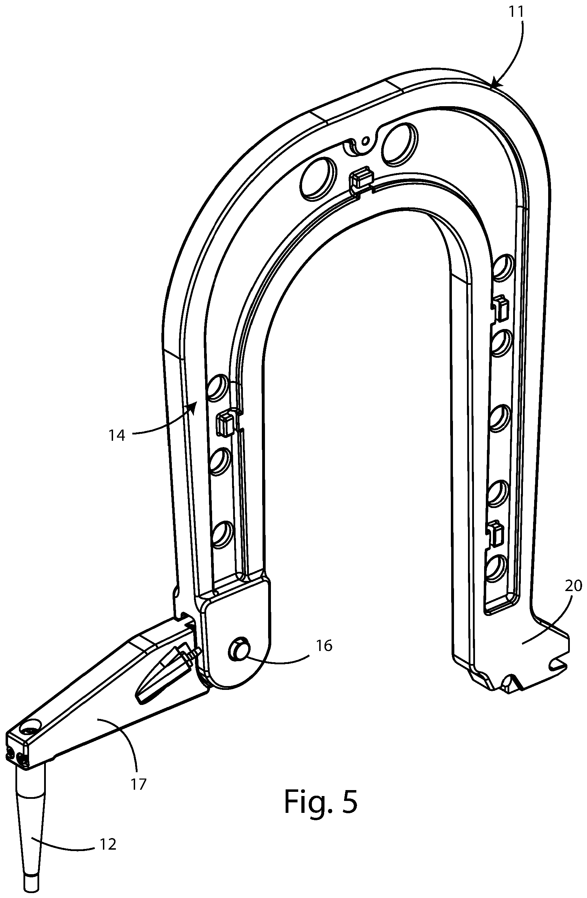

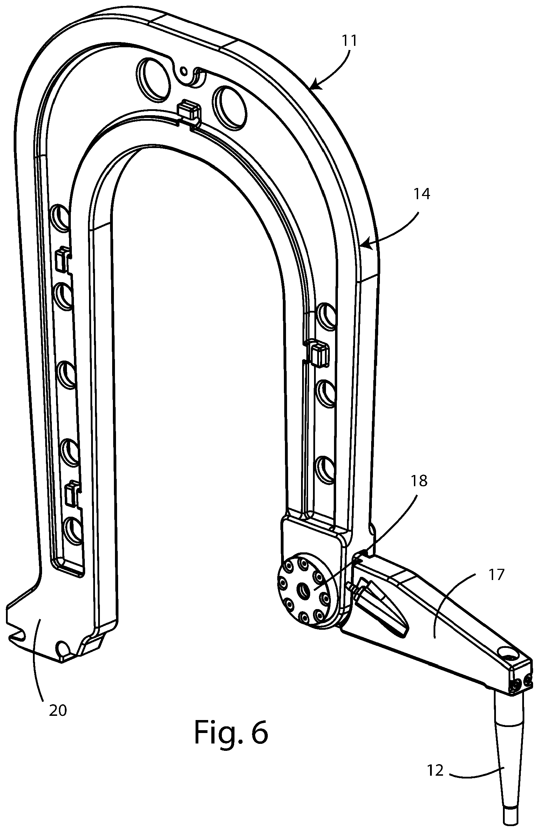

In particular, the application of pressure to the pin 16 releases one of the ends of the terminal 17, which is normally fitted to the curved portion of the arm 14 by a bushing retainer 18, in a way that the aforesaid terminal 17 can be rotated towards the external and maintained in position (figures 5 and 6 attached).

A further rotation towards the inside of the clamp 11 of the terminal 17 brings the terminal 17 to stably remain in its original position.

The mechanism is made of precision, does not present mechanical clearance and supports a workforce of about 550 kg and a welding current of 15000 A.

The invention thus conceived is susceptible of numerous modifications and variations, all of which are within the scope of protection of the appended claims.

## Claims

1. A resistance welding machine (10) for spot welding of metal sheets, such as sheets of vehicle or cars under repairs, comprising a source or generator (15) of electric energy and a clamp (11) having an arm (14) with curved geometry and respective electrodes (12, 13), located at the ends of said arm (14), between which flows, for a predetermined time, an electric current generated by said generator (15) when said arm (14) is actuated, said electrodes (12, 13) being brought close to each other and being able to compress with a given force said sheets to be welded, wherein a first electrode (13) of said electrodes (12, 13) and said generator (15) are connected to a base (20) located at a first end of said arm (14), wherein a hinged mechanism is provided in one portion of said arm (14) which is positioned from the part opposite with respect to said base (20), said hinged mechanism allowing a rotation, towards the external of the clamp (11), of a terminal element (17) of said arm (14) connected to a second (12) of said electrodes (12, 13),
**characterized in that**
said hinged mechanism is formed by a pin (16) and a bushing retainer (18) connecting said portion of said arm (14) to one of the ends of said terminal element (17) by fitting said end of the terminal element (17), wherein, in use, the application of pressure to the pin (16) releases said end end of said terminal element (17) of said arm (14), so that said terminal element (17) can be rotated towards the external and is maintained in position after having been rotated towards the external of the clamp (11), by means of said bushing retainer (18). (10),

2. The resistance welding machine (10) as claimed in claim 1, **characterized in that** said terminal element (17) is apt to rotate towards the inside of the clamp (11) and to be kept in position by means of said bushing retainer (18) after said terminal element (17) is rotated towards the external.

3. The resistance welding machine (10) according to one of the preceding claims, **characterized in that** said hinge mechanism (16, 18) is a precision mechanism which has no mechanical clearance and which has a working force of about 550 Kg and a current of 15000 A.

4. The A-resistance welding machine (10) according to one of the preceding claims, **characterized in that** said arm (14) of said clamp (11) is horse-shoe shaped.

## Patentansprüche

1. Widerstandsschweißmaschine (10) zum Punktschweißen von Metallblechen, wie z.B. Blechen von Fahrzeugen oder Autos, die repariert werden, umfassend eine Quelle oder einen Generator (15) für elektrische Energie und eine Klemme (11), die einen Arm (14) mit gekrümmter Geometrie und jeweiligen Elektroden (12, 13) aufweist, die an den Enden des Arms (14) befindlich sind, zwischen denen für eine vorbestimmte Zeit ein elektrischer Strom fließt, der von dem Generator (15) erzeugt wird, wenn der Arm (14) betätigt wird, wobei die Elektroden (12, 13) nahe zueinander gebracht werden und in der Lage sind, die zu schweißenden Bleche mit einer gegebenen Kraft zusammenzudrücken, wobei eine erste Elektrode (13) der Elektroden (12, 13) und der Generator (15) mit einer Basis (20) verbunden sind, die sich an einem ersten Ende des Arms (14) befindet, wobei ein Gelenkmechanismus in einem Abschnitt des Arms (14) bereitgestellt ist, vom gegenüberliegenden Teil in Bezug auf die Basis (20) positioniert ist, wobei der Gelenkmechanismus eine Drehung eines Anschlusselements (17) des Arms (14), das mit einer zweiten (12) der Elektroden (12, 13) verbunden ist, in Richtung der Außenseite der Klemme (11) ermöglicht,
**dadurch gekennzeichnet, dass**
der Gelenkmechanismus durch einen Stift (16) und einen Buchsenhalter (18) gebildet wird, der den Abschnitt des Arms (14) mit einem der Enden des Anschlusselements (17) verbindet, indem das Ende des Anschlusselements (17) eingepasst wird, wobei im Gebrauch die Ausübung von Druck auf den Stift (16) das Ende des Anschlusselements (17) des Arms (14) freigibt, so dass das Anschlusselement (17) zur Außenseite hin gedreht werden kann und in Position gehalten wird, nachdem es zur Außenseite der Klemme (11) hin gedreht worden ist, und zwar mittels des Buchsenhalters (18).

2. Widerstandsschweißmaschine (10) nach Anspruch 1, **dadurch gekennzeichnet, dass** das Anschlusselement (17) geeignet ist, sich in Richtung der Innenseite der Klemme (11) zu drehen und mittels des Buchsenhalters (18) in Position gehalten zu werden, nachdem das Anschlusselement (17) in Richtung der Außenseite gedreht wurde.

3. Widerstandsschweißmaschine (10) nach einem der vorstehenden Ansprüche, **dadurch gekennzeichnet, dass** der Gelenkmechanismus (16, 18) ein Präzisionsmechanismus ist, der kein mechanisches Spiel aufweist und der eine Arbeitskraft von etwa 550 kg und einen Strom von 15000 A aufweist.

4. Widerstandsschweißmaschine (10) nach einem der vorstehenden Ansprüche, **dadurch gekennzeichnet, dass** der Arm (14) der Klemme (11) hufeisenförmig ist.

## Revendications

1. Machine de soudage par résistance (10) pour le soudage par points de tôles métalliques, telles que des tôles de véhicules ou voitures en réparation, comprenant une source ou un générateur (15) d'énergie électrique et une pince (11) présentant un bras (14) avec une géométrie incurvée et des électrodes correspondantes (12, 13), situées au niveau des extrémités dudit bras (14), entre lesquelles circule, pendant un temps prédéterminé, un courant électrique généré par ledit générateur (15) lorsque ledit bras (14) est actionné, lesdites électrodes (12, 13) étant rapprochées les unes des autres et étant capables de comprimer avec une force donnée lesdites feuilles à souder, dans laquelle une première électrode (13) desdites électrodes (12, 13) et ledit générateur (15) sont reliés à une base (20) située au niveau d'une première extrémité dudit bras (14), dans laquelle un mécanisme de charnière est fourni dans une partie dudit bras (14) qui est positionnée à partir de la partie opposée par rapport à ladite base (20), ledit mécanisme de charnière permettant une rotation, vers l'extérieur de la pince (11), d'un élément de terminal (17) dudit bras (14) relié à une seconde (12) desdites électrodes (12, 13),
**caractérisée en ce que**
ledit mécanisme de charnière est formé par un axe (16) et un dispositif de retenue de bague (18) reliant ladite partie dudit bras (14) à l'une des extrémités dudit élément de terminal (17) en montant ladite extrémité de l'élément de terminal (17), dans laquelle, en cours d'utilisation, l'application d'une pression sur l'axe (16) libère ladite extrémité dudit élément de terminal (17) dudit bras (14), de sorte que ledit élément de terminal (17) peut être tourné vers l'extérieur et est maintenu en position après avoir été tourné vers l'extérieur de la pince (11), à l'aide dudit dispositif de retenue de bague (18).

2. Machine de soudage par résistance (10) selon la revendication 1, **caractérisée en ce que** ledit élément de terminal (17) est apte à tourner vers l'intérieur de la pince (11) et à être maintenu en position à l'aide dudit dispositif de retenue de bague (18) après que ledit élément de terminal (17) a été tourné vers l'extérieur.

3. Machine de soudage par résistance (10) selon l'une des revendications précédentes, **caractérisée en ce que** ledit mécanisme de charnière (16, 18) est un mécanisme de précision qui ne présente pas de déminage mécanique et qui présente une force de travail d'environ 550 kg et un courant de 15 000 A.

4. Machine de soudage par résistance (10) selon l'une des revendications précédentes, **caractérisée en ce que** ledit bras (14) de ladite pince (11) est en forme de fer à cheval.
